# EUROPEAN PATENT SPECIFICATION

(11) **EP 1 186 753 B1**
(45) Date of publication and mention of the grant of the patent: **26.04.2006**
(21) Application number: 01121278.4
(22) Date of filing: 05.09.2001
(51) Int. Cl.: F01L 13/00, F02D 13/02, B60K 6/04

(54) **Control system and method for a hybrid vehicle using regulation of intake valve lift**
Steuerungssystem und -verfahren eines Hybridfahrzeugs mit Regelung der Hubverstellung eines Einlassventils
Système et méthode de régulation d'un véhicule hybride avec gestion de la levée d'une soupape d'admission

(30) Priority: 06.09.2000 JP 2000269760
(43) Date of publication of application: 13.03.2002
(73) Proprietor: NISSAN MOTOR CO., LTD., Yokohama-shi, Kanagawa 221-0023 (JP)
(72) Inventor: Aoyama, Shunichi, Yokosuka-shi, Kanagawa 237-0066 (JP); Sugiyama, Takanobu, Zushi-shi, Kanagawa 249-0003 (JP); Takemura, Shinichi, Yokohama-shi, Kanagawa 236-0028 (JP)
(74) Representative: Grünecker, Kinkeldey, Stockmair & Schwanhäusser Anwaltssozietät

(56) References cited:
- EP-A- 0 224 152
- EP-A- 0 420 443
- EP-A- 0 819 561
- EP-A- 0 839 683
- EP-A- 0 904 971
- DE-A- 19 953 856
- US-A- 6 026 921

## Description

### BACKGROUND OF THE INVENTION

The present invention relates to a control system for a hybrid vehicle. More specifically, the present invention relates to a variable valve timing and lift control of an intake valve of an internal combustion engine installed on a hybrid vehicle. Further, the present invention relates to a control method for a hybrid vehicle.

For the purpose of improving a thermal efficiency of an internal combustion engine, it is an important factor to reduce a pumping loss. Particularly, in a hybrid vehicle, it is indispensable to operate the engine under a highly efficient condition when a battery is to be charged after running of the vehicle driven by a drive motor. To this end, as disclosed in US-A-6 026 921, it is a useful means to decrease the pumping loss by retarding the closing timing of the intake valve and thereby making the expansion ratio be larger than the actual compression ratio. Namely, by retarding the closing timing of the intake valve and thereby lowering the actual compression ratio and by elevating a basic compression ratio (i.e., a compression ratio resulting when the closing timing of the intake valve is not modified or retarded) and thereby elevating the expansion ratio, the actual intake stroke is decreased. Thus, such a means is effective for decreasing the pumping loss.

### SUMMARY OF THE INVENTION

However, unless the basic compression ratio is elevated or set at a high value, a good combustion cannot be attained by largely retarding the closing timing of the intake valve since the actual compression ratio is lowered considerably. Further, at high load, it is desired that the closing timing of the intake valve is set closer to the bottom dead center (BDC) for thereby increasing an amount of intake mixture as much as possible. However, due to restrictions regarding knocking, the closing timing of the intake valve cannot but be set at the timing in the middle of the compression stroke. From the foregoing reason, there has been a problem that the output efficiency of the engine must be sacrificed to some extent.

It is accordingly an object of the present invention to provide a control system for a hybrid vehicle which can reduce the pumping loss considerably while maintaining a good combustion without making higher the basic compression ratio considerably, by optimizing a lift, operation angle and maximum lift phase of an intake valve.

It is a further object of the present invention to provide a control method for a hybrid vehicle which is carried out by the control system of the foregoing character.

According to a first aspect of the present invention, there is provided a control system for a hybrid vehicle having an internal combustion engine as a vehicle propulsion source, an electric energy storage device for storing electric energy, a first generator/motor for selectively operating as an electric motor for starting the engine from the electric energy stored in the electric energy storage device and as an electric generator for generating electric energy to be stored in the electric energy storage device, and a second generator/motor for selectively operating as an electric motor for generating an assistive output to assist in an output of the engine from the electric energy stored in the electric energy storage device and as an electric generator for generating electric energy to be stored in the electric energy storage device, a lift and operation angle varying mechanism mounted on the engine and capable of varying a lift and an operation angle of an intake valve of the engine continuously and simultaneously, and a phase varying mechanism mounted on the engine and capable of varying a maximum lift phase of the intake valve, the control system comprising a controller having a control mode section for stopping the engine during standstill and low seed running of the vehicle and starting the engine by means of the first generator/motor when the vehicle is in a predetermined running condition or an amount of electric energy stored in the electric energy storage device is equal to or lower than a predetermined value, and a control mode section for actuating, after the engine is restarted, the first generator/motor or the second generator/motor to generate electric energy to be stored in the electric energy storage device in response to the amount of electric energy stored in the electric energy storage device and regulating the lift, the operation angle and the maximum lift phase to predetermined values matched with both of an engine load for generation of electric energy and an engine load for driving the vehicle.

According to another aspect of the present invention, there is provided a control method for a hybrid vehicle having an internal combustion engine as a vehicle propulsion source, an electric energy storage device for storing electric energy, a first generator/motor for selectively operating as an electric motor for starting the engine from the electric energy stored in the electric energy storage device and as an electric generator for generating electric energy to be stored in the electric energy storage device, a second generator/motor for selectively operating as an electric motor for generating an assistive output to assist in an output of the engine from the electric energy stored in the electric energy storage device and as an electric generator for generating electric energy to be stored in the electric energy storage device, a lift and operation angle varying mechanism capable of varying a lift and an operation angle of an intake valve of the engine continuously and simultaneously, and a phase varying mechanism capable of varying a maximum lift phase of the intake valve, the method comprising stopping the engine during standstill and low seed running of the vehicle and starting the engine by means of the first generator/motor when the vehicle is in a predetermined running condition or an amount of electric energy stored in the electric energy storage device is equal to or lower than a predetermined value, and actuating, after the engine is restarted, the first generator/motor or the second generator/motor to generate electric energy to be stored in the electric energy storage device in response to the amount of electric energy stored in the electric energy storage device while regulating the lift, the operation angle and the maximum lift phase to predetermined values matched with both of an engine load for generation of electric energy and an engine load for driving the vehicle.

### BRIEF DESCRIPTION OF THE DRAWINGS

Fig. 1 is a perspective view of a variable valve timing and lift control apparatus for an intake valve of an internal combustion engine installed on a hybrid vehicle in which the present invention is embodied;
Fig. 2 is a sectional view of a lift and operation angle varying mechanism of the variable valve timing and lift control apparatus of Fig. 1;
Fig. 3 is a graph illustrating lift and operation angle characteristics provided by the lift and operation angle varying mechanism of Fig. 1;
Fig. 4 is a graph illustrating maximum lift phase characteristics provided by a maximum lift phase varying mechanism of the variable valve timing and lift control apparatus of Fig. 1;
Fig. 5 is a diagrammatic view of the hybrid vehicle;
Figs. 6A to 6C are diagrammatic views for illustrating basic operations of a hybrid vehicle;
Figs. 7A to 7E are views for illustrating a variable control of opening and closing timings of the intake valve in accordance with an engine operating condition;
Fig. 8 is a view for illustrating valve lift characteristics in response to a driving condition of the hybrid vehicle;
Fig. 9 is a timing chart of operations of various portions of the hybrid vehicle in response to an accel opening degree; and
Fig. 10 is a flowchart of an opening and closing timing control of the intake valve.

### DESCRIPTION OF A PREFERRED EMBODIMENT

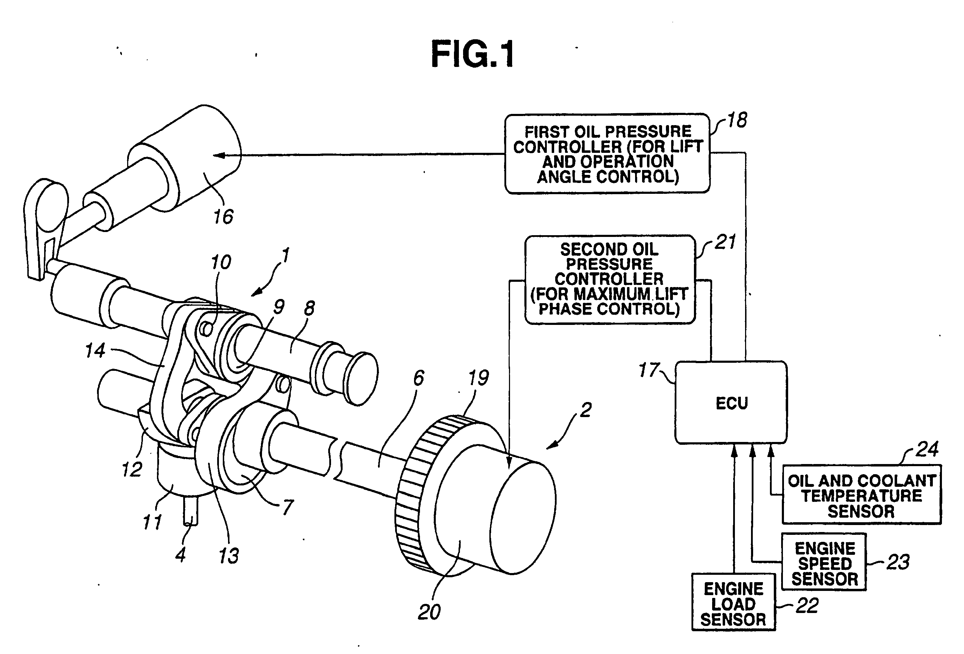

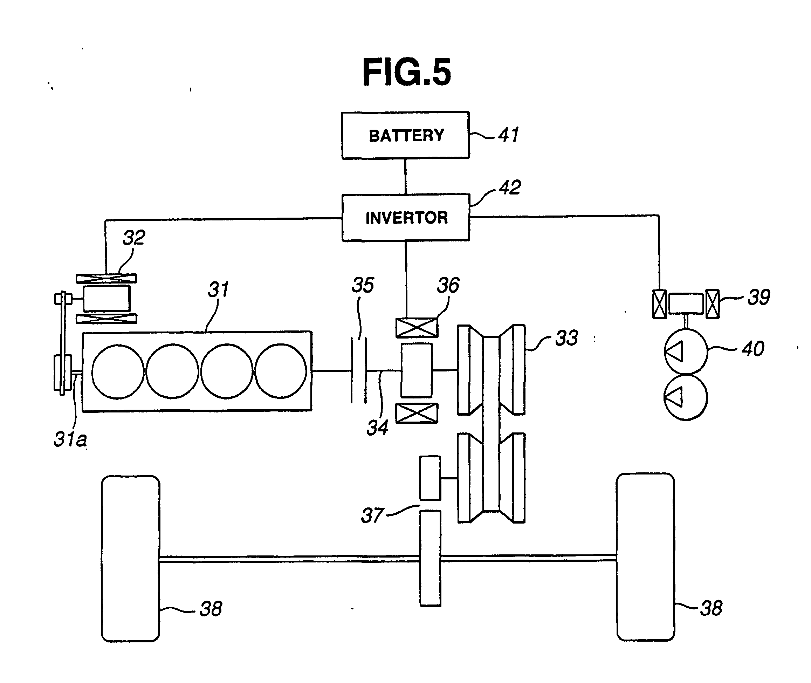

Referring first to Figs. 1 and 5, a hybrid vehicle includes internal combustion engine 31 having a variable valve timing and lift control apparatus consisting of lift and operation angle varying mechanism 1 capable of varying a lift and operation angle of intake valve 4 and maximum lift phase varying mechanism 2 capable of varying a maximum lift phase of intake valve 4, i.e., capable of advancing or retarding a phase of intake valve 4 relative to a rotational phase of crankshaft 31a of engine 31.

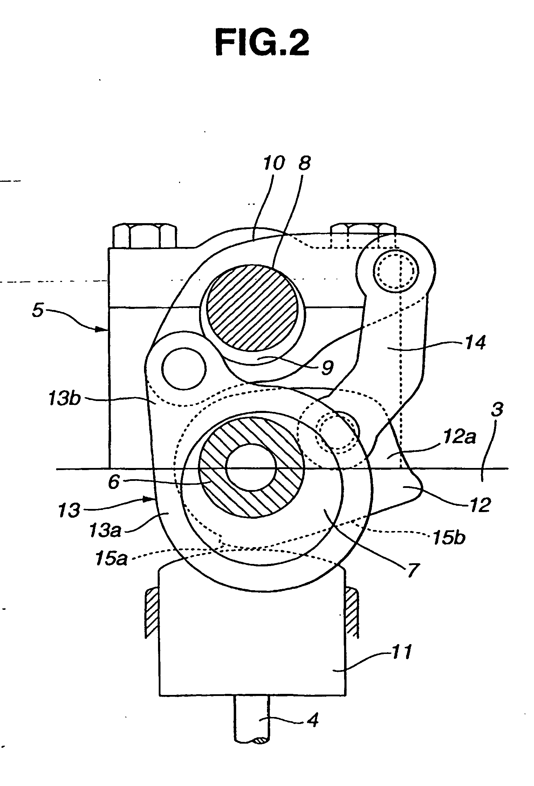

With additional reference to Fig. 2, intake valve 4 is slidably mounted on cylinder head 3 of engine 31 by means of a valve guide (not shown). Lift and operation angle varying mechanism 1 is structurally the same as that disclosed in Japanese Patent Provisional Publication No. 11-107725 which was assigned to the same assignee of this application, so that only brief description will be made thereto hereinlater. Lift and operation angle varying mechanism 1 includes hollow drive shaft 6 rotatably supported on cylinder head 3 by cam brackets 5, eccentric cam 7 force-fitted or otherwise fixedly attached to drive shaft 6, control shaft 8 disposed above and in parallel with drive shaft 6 and rotatably supported on cylinder head 3 by above described cam brackets 5, rocker arm 10 mounted on eccentric cam portion 9 of control shaft 8 for oscillating motion, and oscillation cam 12 engaging tappet 11 provided to an upper end portion of intake valve 4. Eccentric cam 7 and rocker arm 10 are operatively connected by pivotal link 13, and rocker arm 10 and oscillation cam 12 are operatively connected by connecting rod 14.

Drive shaft 6 is driven by crankshaft 31a of engine 31 by way of a timing chain or timing belt (not shown).

Eccentric cam 7 has a circular external surface the center of which is offset from a rotational axis of drive shaft 6 by a predetermined amount. On the circular external surface is rotatably fitted or mounted annular base portion 13a of pivotal link 13.

Rocker arm 10 is mounted at a central portion thereof on eccentric cam portion 9 and has an end portion to which protruded arm portion 13b of above described pivotal link 13 is pivotally connected and another end portion to which an upper end portion of connecting rod 14 is pivotally connected. Eccentric cam portion 9 has a geometric center which is offset from the rotational axis of control shaft 8 so that an axis of oscillation of rocker arm 10 varies depending upon a variation of a rotational position or phase of control shaft 8.

Oscillation cam 12 is rotatably mounted on drive shaft 6 and has laterally protruded end portion 12a to which a lower end portion of connecting link 14 is pivotally connected. Oscillation cam 12 has at its lower side thereof basic circular or dwell surface 15a and cam or lift surface 15b extending from basic circular surface 15a toward above described end portion 12b so as to have a predetermined curved profile. Basic circular surface 15a and cam surface 15b are brought into engagement with the upper surface of tappet 11 in response to oscillation of oscillation cam 12.

Namely, basic circular surface 15a serves as a base circle area that regulates an amount of lift to zero. When oscillation cam 12 is turned or rotated to bring cam surface 15b serving as a lift or rise area into contact with tappet 11, there is caused a lift of intake valve 4 which increases gradually with further rotation of oscillation cam 12. In the meantime, between the basic circular area and the lift area is provided a small ramp area.

Control shaft 8 is constructed so as to be rotatable within a predetermined rotational angle range by being driven -by hydraulic, lift and operation angle control actuator 16 installed on an end of control shaft 8 as shown in Fig. 1. Supply of hydraulic pressure to actuator 16 is performed by first hydraulic pressure controller 18 in response to a control signal from engine control unit (ECU) 17.

The operation of lift and operation angle varying mechanism 1 will now be described. Rotation of drive shaft 6 causes pivotal link 13 to move up and down by the operation of eccentric cam 7. By this, rocker arm 10 is caused to oscillate. This oscillating movement of rocker arm 10 causes oscillation cam 12 to oscillate. By oscillating motion of oscillation cam 12, tappet 11 is caused to move up and down, causing intake valve 4 to open and close.

In this connection, when the rotational position or phase of control shaft 8 is varied by actuator 16, the initial position of rocker arm 10 is caused to vary, and therefore the initial position of oscillation cam 12 is caused to vary.

For example, when eccentric cam portion 9 is generally positioned in a higher place when observed in Fig. 2, i.e., when the geometric center of eccentric cam portion 9 is located above the rotational axis of control shaft 8, rocker arm 10 is bodily moved into a higher place, thus causing end portion 12a of oscillation cam 12 to be moved into a higher position. Namely, when oscillation cam 12 is rotated into the initial position, cam surface 15b is caused to incline away from tappet 11. Accordingly, when oscillation cam 12 is caused to oscillate in response to rotation of drive shaft 6, basic circular surface 15a is brought into contact with tappet 11 for a longer period, whereas cam surface 15b is brought into contact with tappet 11 for a shorter period. Accordingly, the amount of lift is small, and an angular range from an opening timing to a closing timing, i.e., the operation angle is reduced.

On the contrary, eccentric cam portion 9 is generally positioned in a lower place when observed in Fig. 2, rocker arm 10 is bodily moved into a lower place, thus causing end portion 12a of oscillation cam 12 to be moved into a lower position. Namely, when oscillation cam 12 is rotated into the initial position, cam surface 15b is caused to incline toward tappet 11. Accordingly, when oscillation cam 12 oscillates in response to rotation of drive shaft 6, the place where oscillation cam 12 is brought into contact with tappet 11 changes immediately thereafter from basic circular surface 15a to cam surface 15b. Accordingly, the amount of lift becomes larger and the operation angle is enlarged.

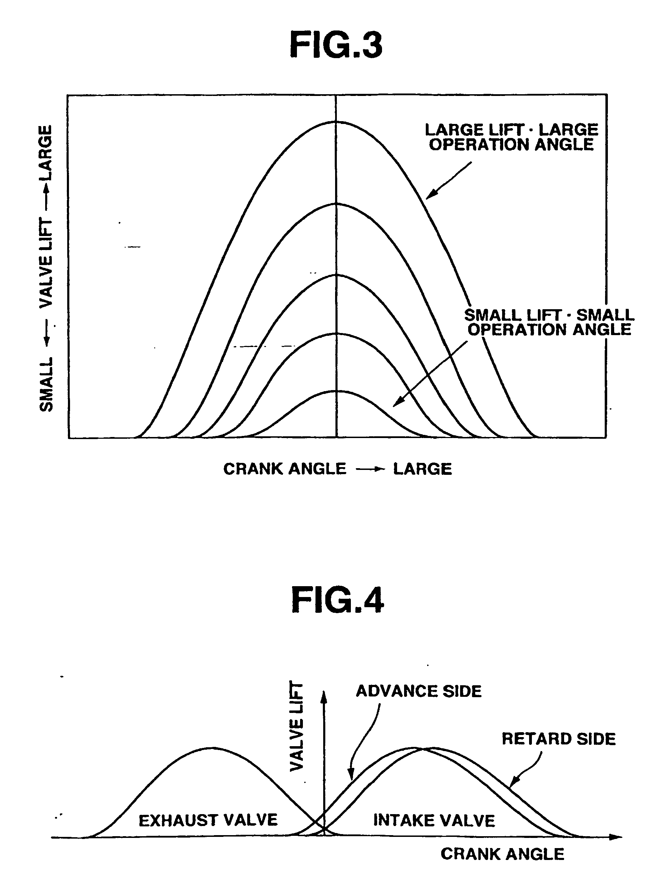

Since the position of eccentric cam portion 9 can be varied continuously, the lift and operation angle characteristics of intake valve 4 can be varied continuously as shown in Fig. 3. Namely, both of the lift and operation angle can be increased and decreased continuously and at the same time. Particularly, by lift and operation angle varying mechanism 1, the opening and closing timings are varied so as to be nearly symmetrical with respect to the maximum lift phase, in response to a variation of the lift and operation angle.

As shown in Fig. 1, maximum lift phase varying mechanism 2 includes sprocket 19 provided to a front end portion of drive shaft 6, and hydraulic, phase varying actuator 20 for rotating sprocket 19 relative to drive shaft 6 within a predetermined angular range. Sprocket 19 is drivingly connected to crankshaft 31a by way of the timing chain or timing belt (not shown) so as to be rotatable in timed relation to crankshaft 31a. Supply of oil pressure to actuator 20 is controlled by second oil pressure controller 21 in response to a signal from engine control unit (ECU) 17. By the control of oil pressure to be supplied to actuator 20, sprocket 19 and drive shaft 16 are rotated relative to each other and the valve timing or phase is advanced or retarded as shown in Fig. 4. Namely, the curve representative of the valve lift characteristics does not change itself but is advanced or retarded in its entirety. Further, such a variation can be attained continuously. Maximum lift phase varying mechanism 2 is not limited to the hydraulic type but can have various other structures such as one utilizing an electromagnetic actuator.

Lift and operation angle varying mechanism 1 and maximum lift phase varying mechanism 2 can be open-loop controlled by using sensors (not shown) for detecting an actual lift, operation angle and maximum lift phase or can be simply closed-loop controlled in response to an engine operating condition. Engine control unit (ECU) 17 determines the control signals to be supplied to actuators 16 and 20 on the basis of an engine load, engine speed and oil and coolant temperatures detected by engine load sensor 22, engine speed sensor 23 and oil and coolant temperature sensor 24, respectively.

Referring to Fig. 5, the hybrid vehicle has internal combustion engine 31 which is provided with the above described variable valve timing and lift control apparatus. To an end of crankshaft 31a of engine 31 is connected starting motor 32 which has both functions of an electric motor and a generator and is rotatable in timed relation to crankshaft 31a at all times. The other end of crankshaft 31a is connected to input shaft 34 of belt type continuously variable transmission 33 by way of electromagnetic clutch 35. To input shaft 34 of continuously variable transmission 33 is attached drive motor 36 which can serve as a generator for producing electric energy by regeneration. Further, continuously variable transmission 33 is drivingly connected to driving wheels 38 by way of final reduction gear 37. Further, for supply of oil pressure to continuously variable transmission 33, there is provided oil pump 40 which is driven by auxiliary motor 39. These three motors 32, 36 and 39 are operated with electric energy supplied thereto from battery 41 by way of invertor 42.

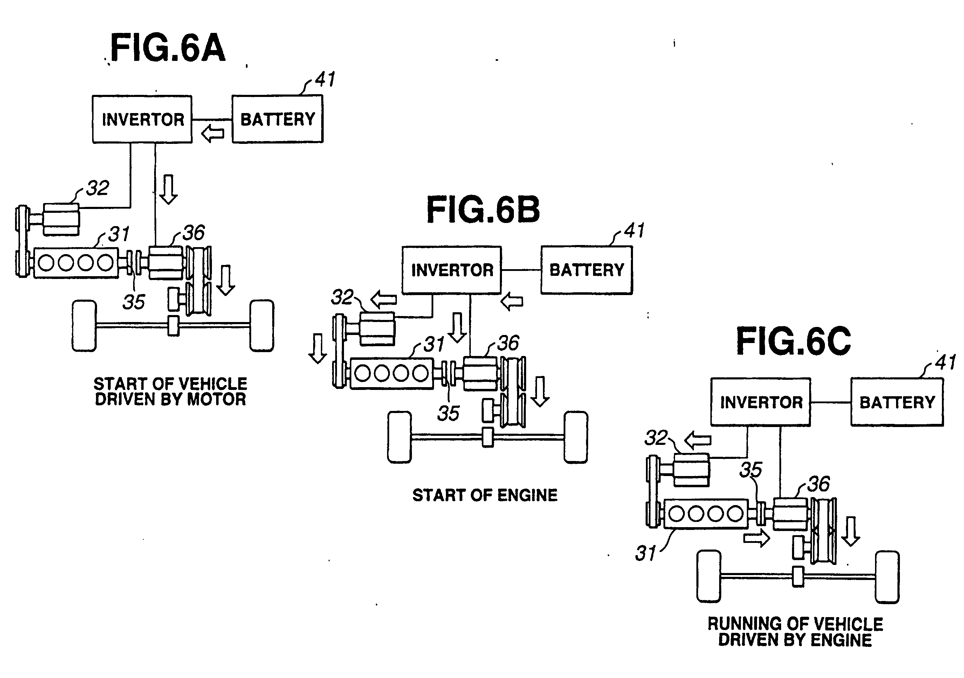

Figs. 6A to 6C illustrate operations of various portions of the hybrid vehicle at start of the vehicle driven by motor, at start of the engine, and at running of the vehicle driven by engine, respectively. In Figs. 6A to 6C, the arrows indicate the flow of torque and energy among the components of the hybrid vehicle. At stoppage or standstill of the vehicle, engine 31 is generally stopped except for the case where the load on engine accessories is large or battery 41 needs to be charged. Thus, at start of the vehicle which is not sudden or rapid but normal, drive motor 36 operated from electric energy stored in battery 41 drives continuously variable transmission 33 to start the vehicle in a suitable transmission gear ratio as shown in Fig. 6A. In the meantime, at running of the vehicle driven by drive motor 36, electromagnetic clutch 35 is disengaged. Thereafter, at low speed running, the running of the vehicle driven by drive motor 36 is continued in principle if the amount of electric energy stored in battery 41 is sufficient. When a predetermined vehicle speed is reached or when the vehicle is to be accelerated, engine 31 is started by starting motor 32 during running of the vehicle driven by drive motor 36 as shown in Fig. 6B. The rotation of engine 31 is synchronized with the rotation of drive motor 36 promptly, and electromagnetic clutch 35 is engaged to shift the vehicle from a motor drive running mode to an engine drive running mode as shown in Fig. 6C. In this connection, in response to production of torque by engine 31, the torque produced by drive motor 36 is reduced, thus making it possible to shift the vehicle from the motor drive running mode to the engine drive running mode without causing any torque shock.

Since the hybrid vehicle has such a motor drive running mode and engine drive running mode, engine 31 is required to generate electric energy for motor drive running. While electric energy can be obtained by regeneration by drive motor 36 at the time of deceleration of the vehicle, that alone is not sufficient and most of the electric energy for motor drive running depends on that generated by starting motor 32 driven by engine 31. Accordingly, in case engine 31 is started after running of the vehicle by the motor drive running mode, electric energy is first generated for compensating for the electric energy having been consumed during running of the vehicle by the motor drive running mode, so that the load on engine 31 is considerably large even at road load running(hereinafter referred to as R/L running) on a usual road. The R/L running is herein used to indicate running of the vehicle wherein the engine speed and the engine load are constant and the throttle opening is 1/4 of full throttle. Generally, the thermal efficiency of an internal combustion engine is improved when the load becomes higher. Thus, it is effective for improving the efficiency of the overall engine to make the engine produce a driving force necessary both for generation of electric energy and for driving of the vehicle when the load on the engine is in a relatively high range. Such production of a driving force, a so-called engine idling stop and regeneration constitute three major factors for improving the thermal efficiency of the hybrid vehicle.

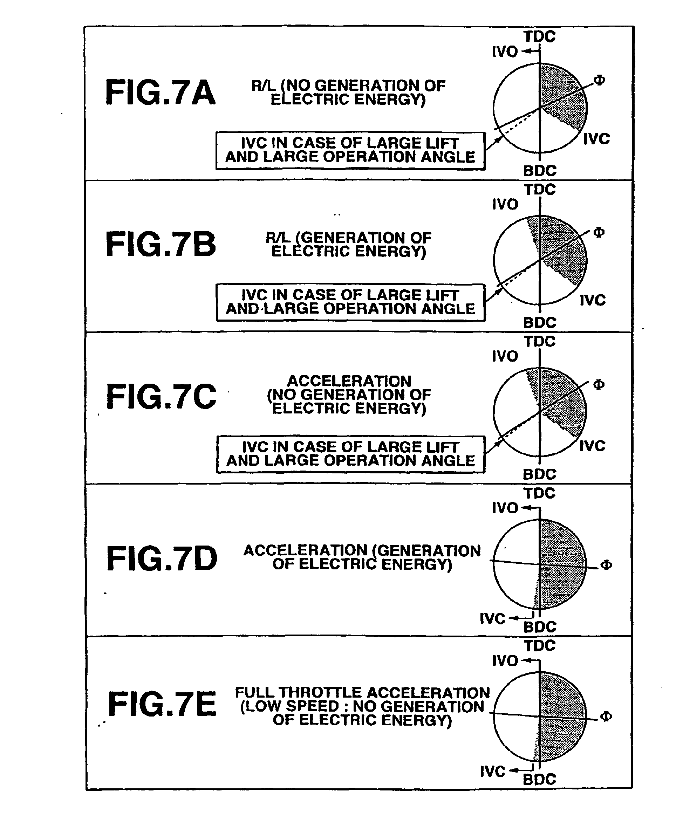

Fig. 7 shows an optimal control of the opening and closing timings of intake valve 4 with a view to improving the thermal efficiency of engine 31 mainly at running of the vehicle during which electric energy is generated. The control is executed by a control program incorporated in the ECU 17 in Fig. 1.

### R/L Running (no generation of electric energy)

This corresponds to the engine drive running mode after charging of the battery is completed. In this instance, since only normal engine drive running is performed, the intake valve is operated so as to have such performance characteristics shown in Fig. 7A, i.e., intake valve 4 has a small lift and small operation angle, the maximum lift phase (i.e., phase where a maximum lift is obtained) φ is located so as to be closer to the top dead center (TDC) than the bottom dead center (BDC), the intake valve opening timing (IVO) is adjacent the TDC, an overlap is set at a small value so that the amount of remaining gas is small, and the intake valve closing timing (IVC) is considerably earlier than the bottom dead center (BDC).

In case the intake valve 4 has a large lift and a large operation angle according to the prior art, the IVC takes the position indicated by the dotted line in Fig. 7A. By this, the actual compression ratio is lowered and therefore the combustion speed becomes slower, thus causing deteriorated combustion. To prevent such deteriorated combustion, it is necessary to elevate the basic compression ratio considerably, which has already been described hereinbefore. Even in case the intake valve has a small lift and a small operation angle according to the present invention, the actual compression ratio is lowered. However, since the product of the opening time and the opening area has been widely or extraordinarily reduced by the small lift and the small operation angle, the gas flow is made considerably larger as compared with that by the large lift and large operation angle. By this, the combustion speed is made higher, thus making it possible to prevent deterioration of combustion and therefore enabling a good fuel consumption to be attained by the effect of a reduced pumping loss and a reduced friction resulting from the small lift and small operation angle.

### R/L Running (generation of electric energy)

Under this condition, the driving force or torque required for driving of the vehicle is the same as that at the above described R/L running but a load for generation of electric energy is applied to engine 31 so that the load on engine 31 is nearly equal to that at the time of acceleration. Under this condition, intake valve 4 is operated so as to have such characteristics as shown in Fig. 7B. Since the amount of intake mixture is increased as compared with that by the characteristics shown in Fig. 7A, the lift and operation angle are a little increased but still held at a low level. Further, the control features that maximum lift phase φ is advanced for thereby enlarging the overlap. In other words, under the condition where the lift and operation angle of intake valve 4 are relatively small, maximum lift phase φ is regulated to an advanced side and the IVO is set at a point earlier than TDC. By this, the amount of remaining gas is increased, and furthermore the pumping loss can be reduced. In this instance, the amount of intake mixture is increased as compared with that by the control characteristics shown in Fig. 7A, so that deterioration of combustion is small though the amount of remaining gas is increased. For this reason, it becomes possible to set the IVO in the manner described above. Further, as compared with the prior art large lift and large operation angle, the gas flow is still at a high level, thus making it possible to compensate for lowering of the actual compression ratio caused by advancing of the IVC. Acceleration (no generation of electric energy)

Under this condition, the driving torque required for the vehicle is increased and the load for generation of electric energy is small. The intake valve has such characteristics as shown in Fig. 7C. In case of gradual or slow acceleration, though depending upon the degree, the control of engine 31 can be the same as that described with reference to Fig. 7B.

### Acceleration (generation of electric energy)

When the load for generation of electric energy becomes large under the condition where intake valve 4 has the performance characteristics shown in Fig. 7C, the overall load on engine 31 exceeds the limit of engine output when the IVO and IVC are controlled as shown in Fig. 7C. In this instance, it is necessary to retain a sufficient amount of intake mixture. To this end, it is necessary to hold the IVO adjacent the TDC, increase the lift and operation angle to a medium lift and medium operation angle for the purpose of locating the IVC adjacent the BDC and retard maximum lift phase φ, as depicted by the performance characteristics in Fig. 7D. This setting of intake valve 4 is similar to that resulting when the vehicle in the engine drive running mode is accelerated by full throttle.

### Full Throttle Acceleration

This is the case where the vehicle is accelerated by full throttle and there is no load for generation of electric energy. It is desirable that the performance characteristics of intake valve 4 under this condition, as shown in Fig. 7E, are set so as to be the same as those shown in Fig. 7D.

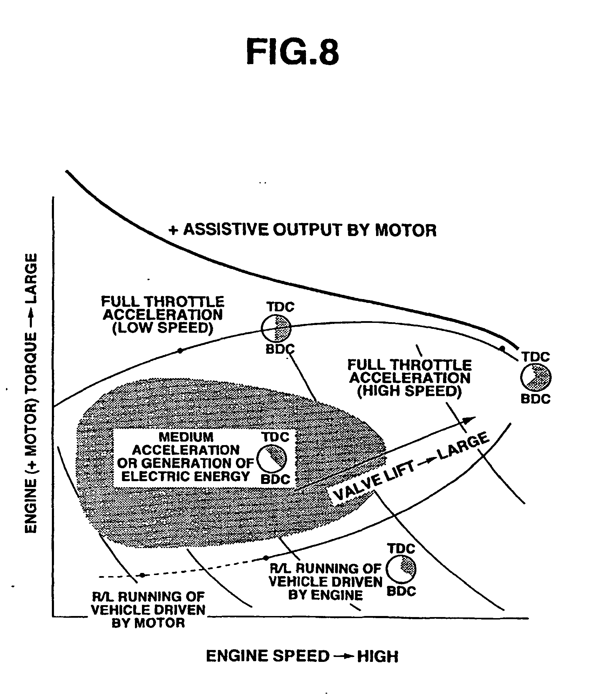

Fig. 8 shows an overall control map which is incorporated the ECU 17. For R/L running, a motor drive mode is selected when the vehicle speed is in a low speed range and the amount of electric energy stored in battery 41 is sufficient. When the vehicle speed is in a middle to high speed range, engine 31 is started to shift the motor drive running mode to the engine drive running mode. When electric energy is to be generated, the operation of the engine is controlled so as to be included within a screened area. In this instance, the torque produced by drive motor 36 is subtracted from the torque produced by engine 31. At the time of medium acceleration, the operation of engine 31 is controlled so as to be included within the screened area similarly as described above. In this instance, when the electric energy to be generated is large, the operation of engine 31 is controlled within a portion of the screened area which is adjacent a full throttle acceleration area. At the time of full throttle acceleration, an assist by drive motor 36 (battery power source) can be available, so that the torque produced by drive motor 36 is added to the torque produced by engine 31. The valve lift is adapted to increase gradually in response to an increase of the amount of intake mixture (i.e., engine speed and load).

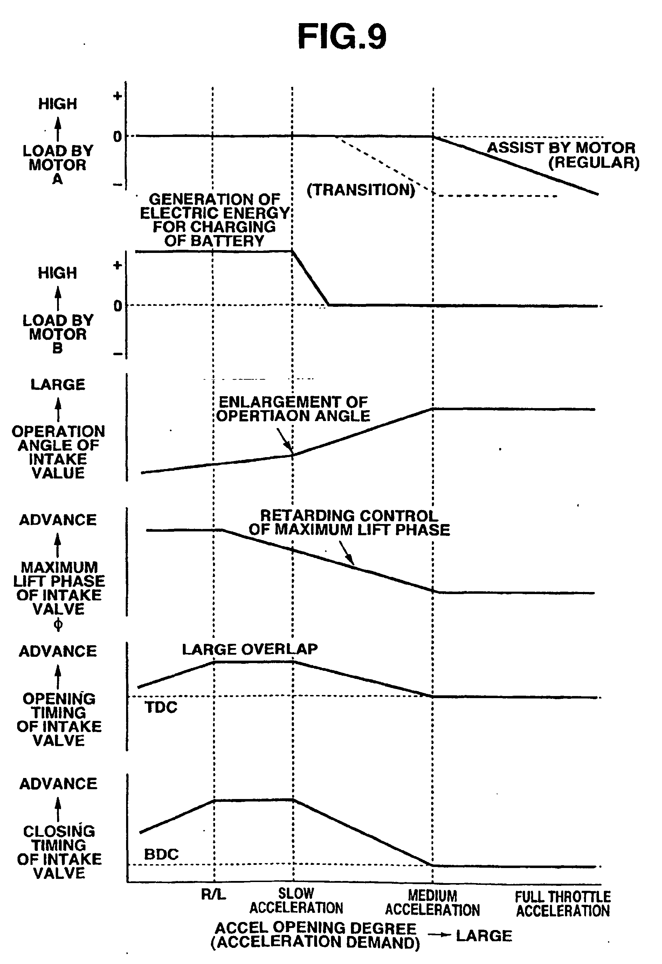

Fig. 9 shows an example of control in accordance with an accel opening degree. The control is executed by a control program incorporated in the ECU 17 in Fig. 1. This is an example in which generation of electric energy for charging of battery 41 is performed at the time of R/L running. Generation of electric energy is continued until the accel opening degree increases so as to shift the running mode of the vehicle to a slow acceleration mode. In this instance, an overlap of intake valve 4 is large, and the IVC is regulated to an advance side which is advanced more than the BDC. Further, when it is required to enhance the degree of acceleration, requirement for increase of an output of engine 31 can be met by first reducing the amount of electric energy generated by starting motor 32 (i.e., motor B in Fig. 9). When such requirement is further enhanced, intake valve 4 is shifted to such intake valve opening and closing characteristics that enable engine 31 to produce as large a torque as possible. At full-throttle acceleration, an assist of a motor drive is used. However, at transition (e.g., when the vehicle is shifted from the R/L running mode to the rapid acceleration mode), there is caused a delay in the control of the lift, operation angle and maximum lift phase of the intake valve, so that the assist of motor drive is used a little earlier for thereby attaining a good acceleration feel.

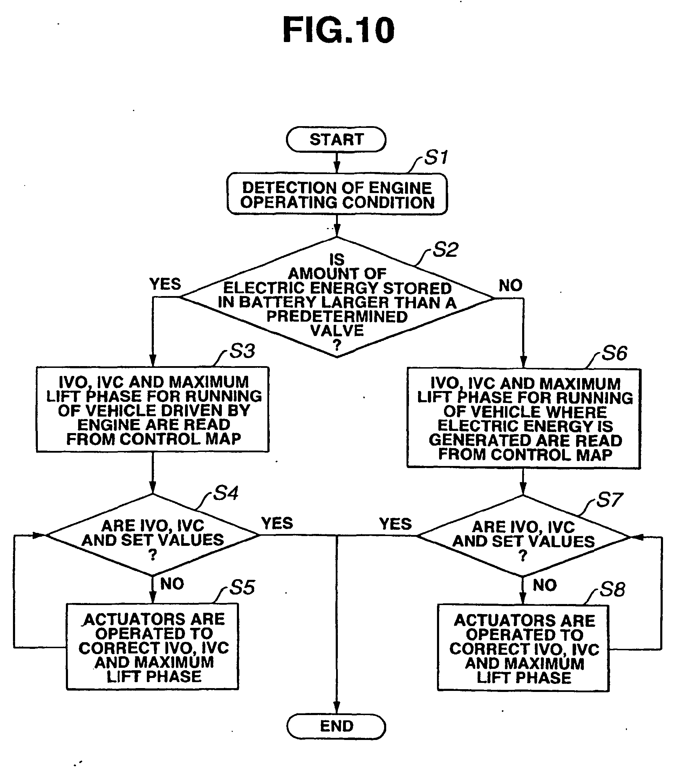

Fig. 10 shows the flowchart for control of the IVO and IVC (i.e., lift and operation angle) and maximum lift phase φ of the intake valve 4. The control is executed by a control program incorporated in the ECU 17 in Fig. 1.

In step S1, the engine operating conditions such as an engine speed and throttle opening degree are detected.

In step S2, it is determined whether or not the quantity of electricity stored in battery 41 is equal to or larger than a predetermined value. If an affirmative decision (Yes) is obtained in step S2, the control flow goes to step S3. If a negative decision (No) is obtained in step S2, the control flow goes to step S6.

In step S3, the set values of IVO, IVC and maximum lift phase φ for running of vehicle driven by engine 31 where electric energy is not generated are read from a control map.

In steps S4 and S5, actuators 16 and 20 are operated for regulating the IVO, IVC and maximum lift phase φ to the set values read in step S3.

On the other hand, in step S6, the set values of IVO, IVC and maximum lift phase φ for running of the vehicle driven by drive motor 36 where electric energy is generated are read from the control map.

In steps S7 and S8, actuators 16 and 20 are operated for regulating the IVO, IVC and maximum lift phase φ to the set values read in step S6.

In the foregoing, it is to be noted that in the above described control of the lift, operation angle and maximum lift phase of the intake valve, the maximum lift phase is regulated to a retard side in preference to enlargement of the lift and the operation angle. By this, it becomes possible to retard the maximum lift phase with a smaller force when the lift is small, thus making it possible to make the closing timing of the intake valve go closer to the bottom dead center with a good responsiveness and decrease the valve overlap promptly.

From the foregoing, it will be understood that according to the present invention it becomes possible to attain an optimal control of the lift, operation angle and maximum lift phase of the intake valve and thereby attain and maintain a good combustion without elevating a basic compression ratio.

Although the invention has been described above by reference to a certain embodiment of the invention, the invention is not limited to the embodiment described above. Modifications and variations of the embodiment described above will occur to those skilled in the art, in light of the teachings. The scope of the invention is defined with reference to the following claims.

## Claims

1. A control system for a hybrid vehicle having an internal combustion engine (31) as a vehicle propulsion source, an electric energy storage device (41) for storing electric energy, a first generator/motor (32) for selectively operating as an electric motor for starting the engine (31) from the electric energy stored in the electric energy storage device (41) and as an electric generator for generating electric energy to be stored in the electric energy storage device (41), and a second generator/motor (36) for selectively operating as an electric motor for generating an assistive output to assist in an output of the engine (31) from the electric energy stored in the electric energy storage device (41) and as an electric generator for generating electric energy to be stored in the electric energy storage device (41), a lift and operation angle varying mechanism (1) mounted on the engine (31) and capable of varying a lift and an operation angle of an intake valve (4) of the engine (31) continuously and simultaneously, and a phase varying mechanism (2) mounted on the engine (31) and capable of varying a maximum lift phase of the intake valve (4), the control system comprising:
a controller (17) having a control mode section for stopping the engine (31) during standstill and low speed running of the vehicle and starting the engine (31) by means of the first generator/motor (32) when the vehicle is in a predetermined running condition or an amount of electric energy stored in the electric energy storage device (41) is equal to or lower than a predetermined value, and a control mode section for actuating, after the engine (31) is restarted, the first generator/motor (32) or the second generator/motor (36) to generate electric energy to be stored in the electric energy storage device (41) in response to the amount of electric energy stored in the electric energy storage device (41) and regulating the lift, the operation angle and the maximum lift phase to predetermined values matched with both of an engine load for generation of electric energy and an engine load for driving the vehicle.

2. A control system according to claim 1, wherein the controller (17) further comprises a control mode section for actuating the first electric motor (32) or the second electric motor (36) to generate electric energy to be stored in the electric energy storage device (41) in accordance with the charged condition of the electric energy storage device (41) and regulating the lift, the operation angle and the maximum lift phase to the predetermined values matched with both of the engine load for generation of electric energy and the engine load for driving the vehicle, at regular running of the vehicle.

3. A control system according to claim 1 or 2, wherein the predetermined running condition is a condition wherein a vehicle speed exceeds a predetermined value or a condition wherein a driving torque necessary for driving the vehicle exceeds a predetermined value.

4. A control system according to claim 2 or 3, wherein the lift, the operation angle and the maximum lift phase of the intake valve (4) are regulated to a small lift, a small operation angle and an advance side phase, respectively, and an opening timing of the intake valve (4) is regulated to a point earlier than a top dead center.

5. A control system according to claim 4, wherein when the amount of electric energy stored in the electric energy storage device (41) is lowered during standstill of the vehicle, the engine (31) is started to idle and the first generator/motor (32) is actuated to generate electric energy.

6. A control system according to claim 1, wherein the controller (17) further comprises a control mode section for stopping generation of electric energy by the first generator/motor (32) or the second generator/motor (36) or lowering the amount of electric energy generated by the first generator/motor (32) or the second generator/motor (36), at acceleration of the vehicle.

7. A control system according to claim 1 or 2, wherein the controller (17) further comprises a control mode section for actuating the first generator/motor (32) or the second generator/motor (36) to generate an assistive output to assist in an output of the engine (31) from the electric energy storage device (41), enlarging the lift and the operation angle of the intake valve (4), and regulating the maximum lift phase to a retard side for thereby regulating the closing timing of the intake valve to a point adjacent the bottom dead center or a point located on a little retard side, at rapid acceleration of the vehicle.

8. A control system according to claim 7, wherein the maximum lift phase is regulated to a retard side in preference to enlargement of the lift and the operation angle.

9. A control system according to any one of preceding claims 1 to 8, wherein the lift and operation angle varying mechanism (1) comprises a drive shaft (6) rotatable in timed relation to a crankshaft (31a) the engine (31), a drive cam (7) in the form of an eccentric cam, mounted on the drive shaft (6) for rotation therewith, the drive cam (7) having a rotational axis which is offset from a rotational axis of the drive shaft (6), a control shaft (8) disposed in parallel with the drive shaft (6) and having an eccentric cam portion (9), a rocker arm (10) mounted on the eccentric cam portion (9) of the control shaft (8) for rotation relative thereto and having a pair of opposite end portions on diametrically opposite sides of the eccentric cam portion (9), a pivotal link (13) mounted on the drive cam (7) for pivotal motion and having an protruded arm portion (13b) which is protruded radially of the drive cam (6) and pivotally connected to one of the opposite ends of the rocker arm (10), an oscillating cam (12) mounted on the drive shaft for oscillating motion and operatively engaging the exhaust valve (4) for opening and closing the exhaust valve when oscillates, and a connecting rod (14) pivotally connected at one of opposite ends thereof to the other of the opposite ends portions of the rocker arm (10) and at the other of the opposite ends thereof to the oscillating cam (12), wherein rotation of the drive shaft (6) causes the rocker arm (10) to oscillate and oscillating motion of the rocker arm (10) causes the oscillation cam (12) to oscillate, and wherein rotation of the control shaft (8) causes the lift and the operation angle of the intake valve (4) to vary continuously and simultaneously.

10. A control system according to claim 9, wherein the phase varying mechanism (2) comprises a sprocket (19) mounted on the drive shaft (6) for rotation therewith and rotatable in timed relation to the crankshaft (31a) of the engine (31), and an actuator (20) for varying a rotational phase of the drive shaft (6) relative to the sprocket (19).

11. A hybrid vehicle comprising:
an internal combustion engine (31) as a vehicle propulsion source;
an electric energy storage device (41) for storing electric energy;
a first generator/motor (31) for selectively operating as an electric motor for starting the engine (31) from the electric energy stored in the electric energy storage device (41) and as an electric generator for generating electric energy to be stored in the electric energy storage device (41);
a second generator/motor (36) for selectively operating as an electric motor for generating an assistive output to assist in an output of the engine (31) from the electric energy stored in the electric energy storage device (41) and as an electric generator for generating electric energy to be stored in the electric energy storage device (41);
a variable valve lift and timing control apparatus mounted on the engine (31) and having a lift and operation angle varying mechanism (1) capable of varying a lift and an operation angle of an intake valve (4) of the engine (31) continuously and simultaneously and a phase varying mechanism (2) capable of varying a maximum lift phase of the intake valve (4); and
a control unit (17) for stopping the engine (31) during standstill and low speed running of the vehicle and starting the engine (31) by means of the first generator/motor (32) when the vehicle is in a predetermined running condition or an amount of electric energy stored in the electric energy storage device (41) is equal to or lower than a predetermined value, and causing, after the engine (31) is restarted, the first generator/motor (32) or the second generator/motor (36) to generate electric energy to be stored in the electric energy storage device (41) in response to the amount of electric energy stored in the electric energy storage device (41) while variably controlling the lift, the operation angle and the maximum lift phase of the intake valve (4) in accordance with both of a load on the engine (31) for generation of electric energy and a load on the engine (31) for driving the vehicle.

12. A control method for a hybrid vehicle having an internal combustion engine (31) as a vehicle propulsion source, an electric energy storage device (41) for storing electric energy, a first generator/motor (32) for selectively operating as an electric motor for starting the engine (31) from the electric energy stored in the electric energy storage device (41) and as an electric generator for generating electric energy to be stored in the electric energy storage device (41), a second generator/motor (36) for selectively operating as an electric motor for generating an assistive output to assist in an output of the engine (31) from the electric energy stored in the electric energy storage device (41) and as an electric generator for generating electric energy to be stored in the electric energy storage device (41), a lift and operation angle varying mechanism (1) capable of varying a lift and an operation angle of an intake valve of the engine continuously and simultaneously, and a phase varying mechanism (2) capable of varying a maximum lift phase of the intake valve, the method comprising:
stopping the engine (31) during standstill and low speed running of the vehicle and starting the engine by means of the first generator/motor (32) when the vehicle is in a predetermined running condition or an amount of electric energy stored in the electric energy storage device is equal to or lower than a predetermined value; and
actuating, after the engine (31) is restarted, the first generator/motor (32) or the second generator/motor (36) to generate electric energy to be stored in the electric energy storage device (41) in response to the amount of electric energy stored in the electric energy storage device (41) while regulating the lift, the operation angle and the maximum lift phase to predetermined values matched with both of an engine load for generation of electric energy and an engine load for driving the vehicle.

13. A control method according to claim 12, wherein at regular running of the vehicle, the first electric motor (32) or the second electric motor (36) generates electric energy to be stored in the electric energy storage device (41) in accordance with the charged condition of the electric energy storage device (41), and the lift, the operation angle and the maximum lift phase are regulated to the predetermined values matched with both of the engine load for generation of electric energy and the engine load for driving the vehicle.

14. A control method according to claim 12 or 13, wherein the predetermined running condition is a condition wherein a vehicle speed exceeds a predetermined value or a condition wherein a driving torque necessary for driving the vehicle exceeds a predetermined value.

15. A control method according to claim 13 or 14, wherein the lift, the operation angle and the maximum lift phase of the intake valve (4) are regulated to a small lift, a small operation angle and an advance side phase, respectively, and an opening timing of the intake valve (4) is regulated to a point earlier than a top dead center.

16. A control method according to claim 15, wherein when the amount of electric energy stored in the electric energy storage device (41) is lowered during standstill of the vehicle, the engine (31) is started to idle and make the first generator/motor (32) generate electric energy.

17. A control method according to claim 12, wherein at acceleration of the vehicle, generation of electric energy by the first generator/motor (32) or the second generator/motor (36) is stopped or the amount of electric energy generated by the first generator/motor (32) or the second generator/motor (36) is lowered.

18. A control method according to claim 12 or 13, wherein at rapid acceleration of the vehicle, the first generator/motor (32) or the second generator/motor (36) generates an assistive output to assist in an output of the engine (31) from the electric energy storage device (41), and the lift and the operation angle of the intake valve (4) are enlarged, with the maximum lift phase being regulated to a retard side, for thereby regulating the closing timing of the intake valve to a point adjacent the bottom dead center or a point located on a little retard side.

19. A control method according to claim 18, wherein the maximum lift phase is regulated to a retard side in preference to enlargement of the lift and the operation angle.

## Patentansprüche

1. Steuerungssystem für ein Hybrid- Fahrzeug, das eine Brennkraftmaschine (31) als eine Fahrzeug- Antriebsquelle hat, eine Elektroenergie- Speichervorrichtung (41) für das Speichern von Elektroenergie, einen ersten Generator / Motor (32) für das wahlweise Arbeiten als ein Elektromotor für das Starten des Brennkraftmaschine (31) aus der in der Elektroenergie- Speichervorrichtung (41) gespeicherten Elektroenergie oder als ein Elektrogenerator für das Erzeugen von Elektroenergie, die in der Elektroenergie- Speichervorrichtung (41) gespeichert wird, und einen zweiten Generator / Motor (36) für das wahlweise Arbeiten als ein Elektromotor für das Erzeugen einer unterstützenden Ausgangsleistung, um eine Ausgangsleistung der Brennkraftmaschine (31) aus der in der Elektroenergie-Speichervorrichtung (41) gespeicherten Elektroenergie zu unterstützen, oder als ein Elektrogenerator für das Erzeugen von Elektroenergie, die in der Elektroenergie- Speichervorrichtung (41) gespeichert wird, eine Hub- und Arbeitswinkel- Veränderungsvorrichtung (1), montiert an der Brennkraftmaschine (31) und die in der Lage ist, einen Hub- und einen Arbeitswinkel eines Einlassventiles (4) der Brennkraftmaschine (31) stufenlos und gleichzeitig zu ändern, und eine Phasenveränderungsvorrichtung (2), montiert an der Brennkraftmaschine (31), und die in der Lage ist, eine maximale Hubphase des Einlassventiles (4) zu variieren, wobei das Steuerungssystem aufweist:
eine Steuereinrichtung (17), die einen Steuerungsmodusabschnitt hat, für das Stoppen der Brennkraftmaschine (31) während des Stillstandes und des Fahrens des Fahrzeuges bei niedriger Geschwindigkeit und beim Starten der Brennkraftmaschine (31) mittels des ersten Generators /Motors (32), wenn das Fahrzeug in einer vorbestimmten Fahrbedingung oder eine in der Elektroenergie-Speichervorrichtung (41) gespeicherte Elektroenergiemenge gleich zu oder niedriger als einvorbestimmter Wert ist, und einen Steuerungsmodusabschnitt für das Betätigen hat, nachdem die Brennkraftmaschine (31) erneut gestartet ist, des ersten Generators / Motors (32) oder des zweiten Generators / Motors (36), um Elektroenergie zu erzeugen, die in der Elektroenergie- Speichervorrichtung (41) gespeichert wird in Abhängigkeit von der Menge der in der Elektroenergie- Speichervorrichtung (41) gespeicherten Elektroenergie und um den Hub, den Arbeitswinkel und die maximale Hubphase auf vorbestimmte Werte, passend sowohl zu einer Motorlast für das Erzeugen von Elektroenergie, als auch zu einer Motorlast für das Antreiben des Fahrzeuges, zu regeln.

2. Steuerungssystem nach Anspruch 1, wobei die Steuereinrichtung (17) außerdem einen Steuerungsmodusabschnitt für das Betätigen des ersten Elektromotors (32) oder des zweiten Elektromotors (36) aufweist, um Elektroenergie zu erzeugen, die in der Elektroenergie- Speichervorrichtung (41) in Übereinstimmung mit dem Aufladezustand der Elektroenergie- Speichervorrichtung (41) gespeichert wird, und um den Hub, den Arbeitswinkel und die maximale Hubphase zu vorbestimmten Werte, passend mit sowohl der Motorlast für das Erzeugen der Elektroenergie, als auch der Motorlast für das Antreiben des Fahrzeuges, beim regulären Fahren des Fahrzeuges zu regeln.

3. Steuerungssystem nach Anspruch 1 oder 2, wobei die vorbestimmte Fahrbedingung eine Bedingung ist, bei der eine Fahrzeuggeschwindigkeit einen vorbestimmten Wert überschreitet oder eine Bedingung ist, bei der ein Antriebsdrehmoment, das für den Antrieb des Fahrzeuges notwendig ist, einen vorbestimmten Wert überschreitet.

4. Steuerungssystem nach Anspruch 2 oder 3, wobei der Hub, der Arbeitswinkel und die maximale Hubphase des Einlassventiles (4) jeweils auf einen kleinen Hub, einen kleinen Arbeitswinkel und eine Vorrück- Seitenphase geregelt werden, und ein Öffnungszeitpunkt des Einlassventiles (4) auf einem Punkt früher als ein oberer Totpunkt geregelt wird.

5. Steuerungssystem nach Anspruch 4, wobei wenn die in der Elektroenergie-Speichervorrichtung (41) gespeicherte Elektroenergiemenge während des Stillstandes des Fahrzeuges vermindert wird, die Brennkraftmaschine (31) in den Leerlauf gestartet wird und der erste Generator / Motor (32) betätigt wird, um elektrische Energie zu erzeugen.

6. Steuerungssystem nach Anspruch 1, wobei die Steuereinrichtung (17) außerdem einen Steuerungsmodusabschnitt für das Stoppen der Erzeugung von Elektroenergie durch den ersten Generator / Motor (32) oder den zweiten Generator / Motor (36) aufweist, oder um die durch den ersten Generator / Motor (32) oder den zweiten Generator / Motor (36) erzeugte Elektroenergiemenge bei der Beschleunigung des Fahrzeuges zu vermindern.

7. Steuerungssystem nach Anspruch 1 oder 2, wobei die Steuereinrichtung (17) außerdem einen Steuerungsmodusabschnitt für das Betätigen des ersten Generators / Motors (36) oder des zweiten Generators / Motors (36) aufweist, um eine Unterstützungsausgangsleistung zu erzeugen, um einer Ausgangsleistung der Brennkraftmaschine (31) aus der Elektroenergie- Speichervorrichtung (41) zu unterstützen, um den Hub und den Arbeitswinkel des Einlassventiles (4) zu vergrößern, und um die maximale Hubphase zu einer Verzögerungsseite zu regeln, um dabei den Schließzeitpunkt des Einlassventiles auf einen Punkt zu regeln, der zu dem unteren Totpunkt benachbart, oder auf einen Punkt, der auf einer geringfügigen Verzögerungsseite angeordnet ist, bei schneller Beschleunigung des Fahrzeuges.

8. Steuerungssystem nach Anspruch 7, wobei die maximale Hubphase auf eine Verzögerungsseite geregelt wird, in Bevorzugung der Vergrößerung des Hubs und des Arbeitswinkels.

9. Steuerungssystem nach einem der vorhergehenden Ansprüche 1 bis 8, wobei die Hub- und Arbeitswinkel- Veränderungsvorrichtung (1) eine Antriebswelle (6) aufweist, drehbar in zeitlicher Beziehung zu einer Kurbelwelle (31 a) der Brennkraftmaschine (31), ein Antriebsnocken (7) in der Form eines exzentrischen Nockens, montiert auf der Antriebswelle (6) zum gemeinsamen Drehen, wobei der Antriebsnocken (7) eine Drehachse hat, die gegenüber einer Drehachse der Antriebswelle (6) versetzt ist, eine Steuerwelle (8), parallel mit der Antriebswelle (6) angeordnet und die einen exzentrischen Nockenabschnitt (9) hat, einen Kipphebelarm (10), montiert an dem exzentrischen Nockenabschnitt (9) der Steuerwelle (8), um sich relativ zueinander zu drehen und der ein Paar von gegenüberliegenden Endabschnitten auf diametral gegenüberliegenden Seiten des exzentrischen Nockenabschnittes (9) hat, eine Schwenkverbindung (13), montiert an dem Antriebsnocken (7) für eine schwenkbare Bewegung und der einen vorspringenden Armabschnitt (13b) hat, der radial des Antriebsnockens (6) vorspringt und schwenkbar mit einem der gegenüberliegenden Enden des Kipphebelarms (10) verbunden ist, einen oszillierenden Nocken (12), montiert auf der Antriebswelle für eine oszillierende Bewegung und betrieblich mit dem Auslassventil (4) für das Öffnen oder Schließen des Auslassventiles verbunden, wenn er oszilliert, und eine Verbindungsstange (14), schwenkbar an einem ihrer gegenüberliegenden Enden mit dem anderen der gegenüberliegenden Endabschnitte des Kipphebelarms (10) verbunden und mit seinem anderen der gegenüberliegenden Enden mit dem oszillierenden Nocken (12) verbunden, wobei die Drehung der Antriebswelle (6) den Kipphebelarm (10) veranlasst, zu oszillieren, und die oszillierende Bewegung des Kipphebelarms (10) den oszillierenden Nocken (12) veranlasst zu oszillieren, und wobei die Drehung der Steuerwelle (8) den Hub- und den Arbeitswinkel des Einlassventiles (4) veranlasst, sich stufenlos und gleichzeitig zu verändern.

10. Steuerungssystem nach Anspruch 9, wobei die Phasenveränderungsvorrichtung (2) ein Kettenrad (19) aufweist, montiert auf der Antriebswelle (6) für die Drehung mit dieser und drehbar in zeitlicher Beziehung mit der Kurbelwelle (31 a) der Brennkraftmaschine (31), und einen Betätiger (20) für das Verändern einer Drehphase der Antriebswelle (6) relativ zu dem Kettenrad (19).

11. Hybridfahrzeug, das aufweist:
eine Brennkraftmaschine (31) als eine Fahrzeugantriebsquelle; eine Elektroenergie- Speichervorrichtung (41) für das Speichern von Elektroenergie;
einen ersten Generator / Motor (32) für das wahlweise Arbeiten als ein Elektromotor für das Starten der Brennkraftmaschine (31) mit der in der Elektroenergie- Speichervorrichtung (41) gespeicherten elektrischen Energie und als ein elektrischer Generator für das Erzeugen von Elektroenergie, die in der Elektroenergie- Speichervorrichtung (41) gespeichert wird;
einen zweiten Generator / Motor (36) für das wahlweise Arbeiten als ein Elektromotor für das Erzeugen einer unterstützenden Ausgangsleistung, um eine Ausgangsleistung der Brennkraftmaschine (31) mit der in der Elektroenergie-Speichervorrichtung (41) gespeicherten Elektroenergie zu unterstützen, oder als ein Elektrogenerator für das Erzeugen von Elektroenergie, die in der Elektroenergie- Speichervorrichtung (41) gespeichert wird;
eine veränderbare Ventil- Hub- und Zeitpunktsteuervorrichtung, montiert an der Brennkraftmaschine (31) und mit einer Hub- und Arbeitswinkel- Veränderungsvorrichtung (1), die in der Lage ist einen Hub- und einen Arbeitswinkel eines Einlassventiles (4) der Brennkraftmaschine (31) stufenlos und gleichzeitig zu verändern, und eine Phasenveränderungsvorrichtung (2), die in der Lage ist, eine maximale Hubphase des Einlassventiles (4) zu varüeren; und
eine Steuerungseinheit (17) für das Stoppen der Brennkraftmaschine (31) während des Stillstandes und des Fahrens bei niedriger Geschwindigkeit des Fahrzeuges und Starten der Brennkraftmaschine (31) mittels des ersten Generators / Motors (32), wenn das Fahrzeug in einer vorbestimmten Fahrbedingung ist oder eine in der Elektroenergie- Speichervorrichtung (41) gespeicherte Elektroenergiemenge gleich ist zu oder niedriger als ein vorbestimmter Wert ist, und die, nachdem die Brennkraftmaschine (31) wieder gestartet ist, den ersten Generator / Motor (32) oder den zweiten Generator / Motor (36) veranlasst, Elektroenergie zu erzeugen, die in der Elektroenergie- Speichervorrichtung (41) in Abhängigkeit von der in der Elektroenergie- Speichervorrichtung (41) gespeicherten Elektroenergiemenge gespeichert wird, während der Hub, der Arbeitswinkel und die maximalen Hubphase des Einlassventiles (4) veränderlich gesteuert werden, in Übereinstimmung mit sowohl einer Belastung auf die Brennkraftmaschine (31) für die Erzeugung von elektrischer Energie, als auch einer Belastung auf die Brennkraftmaschine (31) für das Antrieben des Fahrzeuges.

12. Steuerverfahren für ein Hybridfahrzeug, das eine Brennkraftmaschine (31) als eine Fahrzeugantriebsquelle hat, eine Elektroenergie- Speichervorrichtung (41) für das Speichern von Elektroenergie, einen ersten Generator / Motor (32) für das wahlweise Arbeiten als ein Elektromotor für das Starten der Brennkraftmaschine (31) durch die in der Elektroenergie- Speichervorrichtung (41) gespeicherte Elektroenergie, oder als ein Elektrogenerator für das Erzeugen von Elektroenergie, die in der Elektroenergie- Speichervorrichtung (41) gespeichert wird, und einen zweiten Generator / Motor (36) für das wahlweise Arbeiten als ein Elektromotor für das Erzeugen einer Unterstützungsausgangsleistung, um eine Ausgangsleistung der Brennkraftmaschine (31) mit der in der Elektroenergie- Speichervorrichtung (41) gespeicherten Elektroenergie zu unterstützen, und als ein Elektrogenerator für das Erzeugen von elektrischer Energie, die in der Elektroenergie- Speichervorrichtung (41) gespeichert wird, eine Hub- und Arbeitswinkel-Veränderungsvorrichtung (1), die in der Lage ist, einen Hub und Arbeitswinkel eines Einlassventiles des Motors fortlaufend und gleichzeitig zu ändern, und eine Phasenveränderungsvorrichtung (2), die in der Lage ist, die maximale Hubphase des Einlassventiles zu variieren, wobei das Verfahren aufweist:
Stoppen der Brennkraftmaschine (31) während des Stillstandes oder Fahren des Fahrzeuges bei niedriger Geschwindigkeit und Starten der Brennkraftmaschine (31) mittels des ersten Generators / Motors (32), wenn das Fahrzeug in einer vorbestimmten Fahrbedingung ist oder eine in der Elektroenergie- Speichervorrichtung (41) gespeicherte Elektroenergiemenge gleich ist zu oder niedriger als ein vorbestimmter Wert ist; und
Betätigen, nachdem die Brennkraftmaschine (31) wieder gestartet ist, des ersten Generators / Motors (32) oder des zweiten Generators / Motors (36), um Elektroenergie zu erzeugen, die in der Elektroenergie- Speichervorrichtung (41) in Abhängigkeit von der in der Elektroenergie- Speichervorrichtung (41) gespeicherten Elektroenergiemenge gespeichert wird, während des Regelns des Hubs, des Arbeitswinkels und der maximalen Hubphase auf vorbestimmte Werte, die sowohl einer Motorlast für die Erzeugung von Elektroenergie, als auch einer Motorlast für das Antreiben des Fahrzeuges entsprechen.

13. Steuerverfahren nach Anspruch 12, wobei beim regulären Fahren des Fahrzeuges der erste Elektromotor (32) oder der zweite Elektromotor (36) Elektroenergie erzeugen, die in der Elektroenergie- Speichervorrichtung (41) in Übereinstimmung mit dem Ladungszustand der Elektroenergie- Speichervorrichtung (41) gespeichert wird, und der Hub, der Arbeitswinkel und die maximale Hubphase auf vorbestimmte Werte geregelt werden, die sowohl für die Motorlast für die Erzeugung der Elektroenergie, als auch für die Motorlast für das Antrieben des Fahrzeuges passend sind.

14. Steuerverfahren nach Anspruch 12 oder 13, wobei die vorbestimmte Fahrbedingung eine Bedingung ist, wobei eine Fahrzeuggeschwindigkeit einen vorbestimmten Wert überschreitet, oder eine Bedingung ist, wobei ein Antriebsdrehmoment, das für das Antreiben des Fahrzeuges notwendig ist, einen vorbestimmten Wert überschreitet.

15. Steuerverfahren nach Anspruch 13 oder 14, wobei der Hub, der Arbeitswinkel und die maximale Hubphase des Einlassventiles (4) jeweils auf einen kleinen Hub, einen kleinen Arbeitswinkel und eine Vorverstellungsphase geregelt werden, und ein Öffnungszeitpunkt des Einlassventiles (4) auf einen Punkt früher als ein oberer Totpunkt geregelt wird.

16. Steuerverfahren nach Anspruch 15, wobei wenn die in der Elektroenergie-Speichervorrichtung (41) gespeichert Elektroenergiemenge während des Stillstandes des Fahrzeuges vermindert ist, die Brennkraftmaschine (31) auf Leerlauf gestartet wird und den ersten Generator / Motor (32) veranlasst, Elektroenergie zu erzeugen.

17. Steuerverfahren nach Anspruch 12, wobei bei Beschleunigung des Fahrzeuges die Erzeugung von Elektroenergie durch den ersten Generator / Motor (32) oder durch den zweiten Generator / Motor (36) gestoppt wird, oder die Elektroenergiemenge, die durch den ersten Generator / Motor (32) oder durch den zweiten Generator / Motor (36) erzeugt wird, vermindert wird.

18. Steuerverfahren nach Anspruch 12 oder 13, wobei bei schneller Beschleunigung des Fahrzeuges der erste Generator / Motor (32) oder der zweite Generator / Motor (36) eine Unterstützungsausgangsleistung erzeugen, um eine Ausgangsleistung der Brennkraftmaschine (31) mit der in der Elektroenergie- Speichervorrichtung (41) gespeicherten Elektroenergie zu unterstützen, und der Hub und der Arbeitswinkel des Einlassventiles (4) vergrößert werden, wobei die maximale Hubphase zur Verzögerungsseite hin reguliert wird, um **dadurch** den Schließzeitpunkt des Einlassventiles auf einen Punkt zu regeln, der dem unteren Totpunkt oder einem Punkt, der etwas auf Seiten der Verzögerung liegt, benachbart ist.

19. Steuerverfahren nach Anspruch 18, wobei die maximale Hubphase auf eine Verzögerungsseite geregelt wir, in dem der Vergrößerung des Hubes und des Arbeitswinkels Vorrang gegeben wird.

## Revendications

1. Système de commande pour un véhicule hybride comportant un moteur à combustion interne (31) en tant que source de propulsion de véhicule, un dispositif de stockage d'énergie électrique (41) pour stocker de l'énergie électrique, un premier générateur/moteur (32) pour fonctionner de manière sélective en tant que moteur électrique pour démarrer le moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41), et un deuxième générateur/moteur (36) pour fonctionner de manière sélective en tant que moteur électrique pour générer une sortie d'assistance pour assister une sortie du moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41), un mécanisme de variation de levée et d'angle d'actionnement (1) monté sur le moteur thermique (31) et capable de faire varier une levée et un angle d'actionnement d'une soupape d'admission (4) du moteur thermique (31) continûment et simultanément, et un mécanisme de variation de phase (2) monté sur le moteur thermique (31) et capable de faire varier une phase de levée maximum de la soupape d'admission (4), le système de commande comprenant:
un contrôleur (17) comportant une section de mode de commande pour arrêter le moteur thermique (31) pendant l'arrêt et la marche à faible vitesse du véhicule et pour démarrer le moteur thermique (31) au moyen du premier générateur/moteur (32) lorsque le véhicule est dans une condition de marche prédéterminée ou qu'une quantité d'énergie électrique stockée dans le dispositif de stockage d'énergie électrique (41) est inférieure ou égale à une valeur prédéterminée, et une section de mode de commande pour actionner, après le redémarrage du moteur thermique (31), le premier générateur/moteur (32) ou le deuxième générateur/moteur (36) pour générer de l'énergie électrique destinée à être stockée dans le dispositif de stockage d'énergie électrique (41) en réponse à la quantité d'énergie électrique stockée dans le dispositif de stockage d'énergie électrique (41) et pour réguler la levée, l'angle d'actionnement et la phase de levée maximum à des valeurs prédéterminées correspondant à la fois à une charge du moteur thermique pour la génération d'énergie électrique et à une charge du moteur thermique pour entraîner le véhicule.

2. Système de commande selon la revendication 1, dans lequel le contrôleur (17) comprend en outre une section de mode de commande pour actionner le premier moteur électrique (32) ou le deuxième moteur électrique (36) pour générer de l'énergie électrique destinée à être stockée dans le dispositif de stockage d'énergie électrique (41) en fonction de la condition de charge du dispositif de stockage d'énergie électrique (41) et pour réguler la levée, l'angle d'actionnement et la phase de levée maximum aux valeurs prédéterminées correspondant à la fois à la charge du moteur thermique pour la génération d'énergie électrique et à la charge du moteur thermique pour entraîner le véhicule lors de la marche normale du véhicule.

3. Système de commande selon la revendication 1 ou 2, dans lequel la condition de marche prédéterminée est une condition dans laquelle une vitesse de véhicule dépasse une valeur prédéterminée ou une condition dans laquelle un couple d'entraînement nécessaire pour entraîner le véhicule dépasse une valeur prédéterminée.

4. Système de commande selon la revendication 2 ou 3, dans lequel la levée, l'angle d'actionnement et la phase de levée maximum de la soupape d'admission (4) sont régulés à une faible levée, un petit angle d'actionnement et une phase en avance, respectivement, et un réglage d'ouverture de la soupape d'admission (4) est régulé à un point en avance par rapport à un point mort haut.

5. Système de commande selon la revendication 4, dans lequel, lorsque la quantité d'énergie électrique stockée dans le dispositif de stockage d'énergie électrique (41) est diminuée pendant l'arrêt du véhicule, le moteur thermique (31) est démarré au ralenti et le premier générateur/moteur (32) est actionné pour générer de l'énergie électrique.

6. Système de commande selon la revendication 1, dans lequel le contrôleur (17) comprend en outre une section de mode de commande pour arrêter la génération d'énergie électrique par le premier générateur/moteur (32) ou le deuxième générateur/moteur (36) ou pour diminuer la quantité d'énergie électrique générée par le premier générateur/moteur (32) ou le deuxième générateur/moteur (36) lors d'une accélération du véhicule.

7. Système de commande selon la revendication 1 ou 2, dans lequel le contrôleur (17) comprend en outre une section de mode de commande pour actionner le premier générateur/moteur (32) ou le deuxième générateur/moteur (36) pour générer une sortie d'assistance pour assister une sortie du moteur thermique (31) à partir du dispositif de stockage d'énergie électrique (41), pour augmenter la levée et l'angle d'actionnement de la soupape d'admission (4), et pour réguler la phase de levée maximum vers un côté de retard pour, de ce fait, réguler le réglage de fermeture de la soupape d'admission à un point adjacent au point mort bas ou à un point situé d'un côté de faible retard, lors d'une accélération rapide du véhicule.

8. Système de commande selon la revendication 7, dans lequel la phase de levée maximum est régulée vers un côté de retard de préférence à une augmentation de la levée et de l'angle d'actionnement.

9. Système de commande selon l'une quelconque des revendications 1 à 8 précédentes, dans lequel le mécanisme de variation de levée et d'angle d'actionnement (1) comprend un arbre d'entraînement (6) pouvant tourner en synchronisation avec un vilebrequin (31a) du moteur thermique (31), une came d'entraînement (7) sous la forme d'une came excentrique, montée sur l'arbre d'entraînement (6) pour tourner avec celui-ci, la came d'entraînement (7) ayant un axe de rotation qui est décalé par rapport à un axe de rotation de l'arbre d'entraînement (6), un arbre de commande (8) disposé parallèlement à l'arbre d'entraînement (6) et comportant une partie de came excentrique (9), un culbuteur (10) monté sur la partie de came excentrique (9) de l'arbre de commande (8) pour tourner par rapport à celle-ci et comportant deux parties d'extrémité opposées sur des côtés diamétralement opposés de la partie de came excentrique (9), une liaison pivotante (13) montée sur la came d'entraînement (7) pour un mouvement de pivotement et comportant une partie de bras saillante (13b) qui fait saillie radialement de la came d'entraînement (6) et reliée de manière pivotante à l'une des extrémités opposées du culbuteur (10), une came oscillante (12) montée sur l'arbre d'entraînement pour un mouvement d'oscillation et venant en prise de manière fonctionnelle avec la soupape d'échappement (4) pour ouvrir et fermer la soupape d'échappement lorsqu'elle oscille, et une bielle (14) reliée de manière pivotante à l'une de ses extrémités opposées à l'autre des parties d'extrémité opposées du culbuteur (10) et à l'autre de ses extrémités opposées à la came oscillante (12), dans lequel la rotation de l'arbre d'entraînement (6) provoque l'oscillation du culbuteur (10) et le mouvement d'oscillation du culbuteur (10) provoque l'oscillation de la came oscillante (12), et dans lequel la rotation de l'arbre de commande (8) provoque une variation continue et simultanée de la levée et de l'angle d'actionnement de la soupape d'admission (4).

10. Système de commande selon la revendication 9, dans lequel le mécanisme de variation de phase (2) comprend une roue dentée (19) montée sur l'arbre d'entraînement (6) pour tourner avec celui-ci et pouvant tourner en synchronisation avec le vilebrequin (31a) du moteur thermique (31), et un actionneur (20) pour faire varier une phase de rotation de l'arbre d'entraînement (6) par rapport à la roue dentée (19).

11. Véhicule hybride comprenant:
un moteur à combustion interne (31) en tant que source de propulsion de véhicule;
un dispositif de stockage d'énergie électrique (41) pour stocker de l'énergie électrique;
un premier générateur/moteur (32) pour fonctionner de manière sélective en tant que moteur électrique pour démarrer le moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41);
un deuxième générateur/moteur (36) pour fonctionner de manière sélective en tant que moteur électrique pour générer une sortie d'assistance pour assister une sortie du moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41);
un dispositif de commande de levée et de réglage de soupape variable monté sur le moteur thermique (31) et comportant un mécanisme de variation de levée et d'angle d'actionnement (1) capable de faire varier une levée et un angle d'actionnement d'une soupape d'admission (4) du moteur thermique (31) continûment et simultanément, et un mécanisme de variation de phase (2) capable de faire varier une phase de levée maximum de la soupape d'admission (4); et
une unité de commande (17) pour arrêter le moteur thermique (31) pendant l'arrêt et la marche à faible vitesse du véhicule et pour démarrer le moteur thermique (31) au moyen du premier générateur/moteur (32) lorsque le véhicule est dans une condition de marche prédéterminée ou qu'une quantité d'énergie électrique stockée dans le dispositif de stockage d'énergie électrique (41) est inférieure ou égale à une valeur prédéterminée, et pour amener, après le redémarrage du moteur thermique (31), le premier générateur/moteur (32) ou le deuxième générateur/moteur (36) à générer de l'énergie électrique destinée à être stockée dans le dispositif de stockage d'énergie électrique (41) en réponse à la quantité d'énergie électrique stockée dans le dispositif de stockage d'énergie électrique (41) tout en commandant de manière variable la levée, l'angle d'actionnement et la phase de levée maximum de la soupape d'admission (4) en fonction à la fois d'une charge sur le moteur thermique (31) pour la génération d'énergie électrique et d'une charge sur le moteur thermique (31) pour entraîner le véhicule.

12. Procédé de commande pour un véhicule hybride comportant un moteur à combustion interne (31) en tant que source de propulsion de véhicule, un dispositif de stockage d'énergie électrique (41) pour stocker de l'énergie électrique, un premier générateur/moteur (32) pour fonctionner de manière sélective en tant que moteur électrique pour démarrer le moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41), et un deuxième générateur/moteur (36) pour fonctionner de manière sélective en tant que moteur électrique pour générer une sortie d'assistance pour assister une sortie du moteur thermique (31) à partir de l'énergie électrique stockée dans le dispositif de stockage d'énergie électrique (41) et en tant que générateur électrique pour générer de l'énergie électrique destinée à être stockée dans le dispositif de stockage d'énergie électrique (41), un mécanisme de variation de levée et d'angle d'actionnement (1) capable de faire varier une levée et un angle d'actionnement d'une soupape d'admission du moteur thermique continûment et simultanément, et un mécanisme de variation de phase (2) capable de faire varier une phase de levée maximum de la soupape d'admission, le procédé comprenant:
l'arrêt du moteur thermique (31) pendant l'arrêt et la marche à faible vitesse du véhicule et le démarrage du moteur thermique au moyen du premier générateur/moteur (32) lorsque le véhicule est dans une condition de marche prédéterminée ou qu'une quantité d'énergie électrique stockée dans le dispositif de stockage d'énergie électrique est inférieure ou égale à une valeur prédéterminée; et
l'actionnement, après le redémarrage du moteur thermique (31), du premier générateur/moteur (32) ou du deuxième générateur/moteur (36) pour générer de l'énergie électrique destinée à être stockée dans le dispositif de stockage d'énergie électrique (41) en réponse à la quantité d'énergie électrique stockée dans le dispositif de stockage d'énergie électrique (41) tout en régulant la levée, l'angle d'actionnement et la phase de levée maximum à des valeurs prédéterminées correspondant à la fois à une charge du moteur thermique pour la génération d'énergie électrique et à une charge du moteur thermique pour entraîner le véhicule.

13. Procédé de commande selon la revendication 12, dans lequel, lors de la marche normale du véhicule, le premier moteur électrique (32) ou le deuxième moteur électrique (36) génère de l'énergie électrique destinée à être stockée dans le dispositif de stockage d'énergie électrique (41) en fonction de la condition de charge du dispositif de stockage d'énergie électrique (41), et la levée, l'angle d'actionnement et la phase de levée maximum sont régulés aux valeurs prédéterminées correspondant à la fois à la charge du moteur thermique pour la génération d'énergie électrique et à la charge du moteur thermique pour entraîner le véhicule.

14. Procédé de commande selon la revendication 12 ou 13, dans lequel la condition de marche prédéterminée est une condition dans laquelle une vitesse de véhicule dépasse une valeur prédéterminée ou une condition dans laquelle un couple d'entraînement nécessaire pour entraîner le véhicule dépasse une valeur prédéterminée.

15. Procédé de commande selon la revendication 13 ou 14, dans lequel la levée, l'angle d'actionnement et la phase de levée maximum de la soupape d'admission (4) sont régulés à une faible levée, un petit angle d'actionnement et une phase en avance, respectivement, et un réglage d'ouverture de la soupape d'admission (4) est régulé à un point en avance par rapport à un point mort haut.

16. Procédé de commande selon la revendication 15, dans lequel, lorsque la quantité d'énergie électrique stockée dans le dispositif de stockage d'énergie électrique (41) est diminuée pendant l'arrêt du véhicule, le moteur thermique (31) est démarré au ralenti et le premier générateur/moteur (32) génère de l'énergie électrique.

17. Procédé de commande selon la revendication 12, dans lequel, lors d'une accélération du véhicule, la génération d'énergie électrique par le premier générateur/moteur (32) ou le deuxième générateur/moteur (36) est arrêtée ou la quantité d'énergie électrique générée par le premier générateur/moteur (32) ou le deuxième générateur/moteur (36) est diminuée.

18. Procédé de commande selon la revendication 12 ou 13, dans lequel, lors d'une accélération rapide du véhicule, le premier générateur/moteur (32) ou le deuxième générateur/moteur (36) génère une sortie d'assistance pour assister une sortie du moteur thermique (31) à partir du dispositif de stockage d'énergie électrique (41), et la levée et l'angle d'actionnement de la soupape d'admission (4) sont augmentés, la phase de levée maximum étant régulée vers un côté de retard pour, de ce fait, réguler le réglage de fermeture de la soupape d'admission à un point adjacent au point mort bas ou à un point situé d'un côté de faible retard.

19. Procédé de commande selon la revendication 18, dans lequel la phase de levée maximum est régulée vers un côté de retard de préférence à une augmentation de la levée et de l'angle d'actionnement.
